# EUROPEAN PATENT APPLICATION

(11) **EP 2 031 821 A2**
(43) Date of publication of application: **04.03.2009**
(21) Application number: 08014942.0
(22) Date of filing: 23.08.2008
(51) Int. Cl.: H04L 29/06

(54) **System for tracing copyright of contents and control method thereof**

(30) Priority: 28.08.2007 KR 20070086525
(71) Applicant: Kim, Chung-tae, Opo-eub Gwangju-si, Gyeonggi-do 464-892 (KR)
(72) Inventor: Kim, Chung-tae, Opo-eub Gwangju-si, Gyeonggi-do 464-892 (KR)
(74) Representative: Stenger, Watzke & Ring

(57) **Abstract**

A system for tracking copyright information of content and a method for controlling the same are provided. When a user creates multimedia content through an index file which allows the user to search for desired content through a keyword based on humans, things, time, and/or space, or edits content created by another to create edited content, the index file inherits copyright information of the content, thereby making it possible to perform keyword search of the content. In addition, copyright information of content is inherited as the content is transacted and edited, thereby making it possible to track and protect the copyright of content and also to perform proper distribution of the revenue for the sale of the content.

## Description

### BACKGROUND OF THE INVENTION

### Field of the Invention

The present invention relates to a system for tracking copyright information of content and a method for controlling the same, and more particularly to a system for tracking copyright information of content and a method for controlling the same, wherein, when a user creates multimedia content or edits content created by another to create edited content, through an index file which allows the user to search for desired content through a keyword based on humans, things, time, and/or space, the index file inherits copyright information of the content, thereby making it possible to perform keyword search of the content and, in addition, copyright information of content is inherited as the content is transacted or edited, thereby making it possible to track and protect the copyright of content and also to perform proper distribution of the revenue for the sale of the content.

### Description of the Related Art

Recently, we have experienced circumstances which allow not only experts but also general persons to create multimedia content including moving images. Much attention has been focused on the spread of User Created Content (UCC) along with the rapid development of online moving image services.

Multimedia content is transacted and distributed over the Internet in such a manner that the user downloads content in units of files or receives and views a stream of content during a given period. Since the copyright problem of such transacted and distributed multimedia content has not yet been solved, the multimedia content may be reedited (or edited) by inserting effects such as acoustic effects or characters into the multimedia content or by adding extra material to the multimedia content or new multimedia content may be created and distributed by adding new content to a reedited section in the multimedia content. However, since the copyright of the original author of the reedited multimedia content is not tracked, the revenue of the multimedia content is not properly distributed. This prevents active distribution and transaction of a lot of multimedia content and allows distribution and transaction through an illegal method.

### SUMMARY OF THE INVENTION

Therefore, the present invention has been made in view of the above problems, and it is an object of the present invention to provide a system for tracking copyright information of content and a method for controlling the same, wherein, when a user creates multimedia content or edits content created by another to create edited content, through an index file which allows the user to search for desired content through a keyword based on humans, things, time, and/or space, the index file inherits copyright information of the content, thereby making it possible to perform keyword search of the content and, in addition, copyright information of content is inherited as the content is transacted or edited, thereby making it possible to track and protect the copyright of content and also to perform proper distribution of the revenue for the sale of the content.

In accordance with one aspect of the present invention, the above and other objects can be accomplished by the provision of a system for tracking copyright information of content, the system comprising a content database that stores multimedia content; an index file database that stores an index file, including an index for keyword search of the content database, and new or inherited copyright information; a transaction information database that stores transaction information and copyright inheritance information of multimedia content as the multimedia content is transacted; and a service server that allows multimedia content stored in the content database to be streamed or downloaded to a user computer connected through the Internet, creates an index file including copyright information of uploaded multimedia content and stores the created index file in the index file database and that allows the multimedia content stored in the content database to be edited and creates an index file of the edited content including new copyright information by inheriting higher-level copyright information of the edited content and stores the created index file in the index file database.

Preferably, the index file includes copyright information of the multimedia content, a keyword extracted by analyzing a specific section of the multimedia content in human, thing, time, and space aspects, and start and end times of the specific section and also includes a content action ID of multimedia content created by the user, a reference action ID, which is a reference content action ID of the reedited multimedia content, and a top-level reference action ID, which is a top-level reference content action ID of the reedited multimedia content, for copyright tracking.

Preferably, the index file further includes price information.

In accordance with another aspect of the present invention, the above and other objects can also be accomplished by the provision of a method of controlling a system for tracking copyright information of content, the method comprising performing a login process when a user computer is connected through the Internet; determining whether or not the user desires to purchase content after performing the login process; receiving an input index word, when it is determined that the user desires to purchase content, and searching for a corresponding index file in an index database to retrieve corresponding content; allowing the user to select the retrieved content to make payment; tracking an author of the purchased content, who has copyright of the content, based on copyright information included in the index file, notifying the author of sale of the content, and storing the content in a purchaser's storage; creating, when it is determined that the user desires to register new content, an index file of uploaded content; receiving a key word and a new copyright in the created index file and storing the uploaded content and the created index file in the content database and the index file database; allowing, when it is determined that the user desires to edit content, the user to edit the content stored in the purchaser's storage and creating an index file of the edited content; and inheriting copyright information from the index file of the content referenced to create the edited file and receiving a key word and a new copyright and recording the inherited copyright information and the input search word and new copyright in the index file of the edited content and storing the edited content and the index file of the edited content in the content database and the index file database.

Preferably, the purchaser's storage stores content purchased by the user and content created by the user.

Preferably, the index file includes copyright information of the content, a keyword extracted by analyzing a specific section of the content in human, thing, time, and space aspects, and start and end times of the specific section and also includes a content action ID of content created by the user, a reference action ID, which is a reference content action ID of the reedited content, and a top-level reference action ID, which is a top-level reference content action ID of the reedited content, for copyright tracking.

Preferably, notifying the author of the sale of the content includes performing distribution of revenue for the sale of the content.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a block diagram of a system for tracking copyright information of content according to the invention;
FIG. 2 is a flow chart illustrating a method for controlling the system for tracking copyright information of content according to the invention;
FIGS. 3 and 4 illustrate a procedure for tracking copyright information of content according to the invention; and
FIG. 5 illustrates revenue distribution using the system for tracking copyright information of content according to the invention.

### DETAILED DESCRIPTION OF THE PREFERRED EMBODIMENTS

Preferred embodiments of the invention will now be described in detail with reference to the accompanying drawings. In the following description, the same reference numbers and names will be used to refer to the same or like parts wherever possible. The embodiments set forth herein should be construed as illustrative only, without limiting the scope of the invention. Those skilled in the art will be able to make various changes without departing from the spirit of the invention.

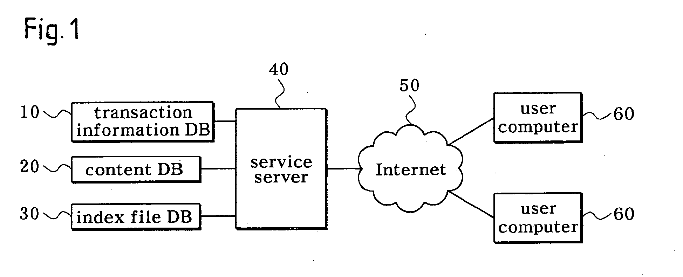

FIG. 1 is a block diagram of a system for tracking copyright information of content according to the invention.

As illustrated in FIG. 1, the content copyright information tracking system according to the invention includes a transaction information database 10, a content database 20, an index file database 30, and a service server 40. The content database 20 stores multimedia content. The index file database 30 stores an index file, which includes an index for keyword search of the content database 20, and new or inherited copyright information. The transaction information database 10 stores transaction information and copyright inheritance information of multimedia content as the multimedia content is transacted. The service server 40 allows multimedia content stored in the content database 20 to be streamed or downloaded to a user computer 60 connected through the Internet 50. The service server 40 also creates an index file including copyright information of uploaded multimedia content and stores the created index file in the index file database 30. The service server 40 also allows the multimedia content stored in the content database 20 to be edited and creates an index file of the edited content including new copyright information by inheriting higher-level copyright information of the edited content and stores the created index file in the index file database 30.

The index file includes copyright information of the multimedia content, keywords extracted by analyzing a specific section of the multimedia content in human, thing, time, and space aspects, and start and end times of the specific section and also includes an action ID indicating the specific section of the multimedia content, a reference action ID, which is a reference content action ID of the multimedia content if the multimedia content has been reedited, and a top-level (or root) reference action ID, which is a top-level reference content action ID of the reedited multimedia content, for copyright tracking. The index file may further include price information.

Accordingly, when the user computer 60 is connected to the service server 40 through the Internet 50 to purchase multimedia content stored in the content database 20, the service server 40 tracks authors of the multimedia content according to copyright information stored in an index file corresponding to the multimedia content and notifies the authors of the purchase information through material in the transaction information database 10 and distributes revenue for the multimedia content to the authors.

In addition, when a user registers multimedia content created by the user, the service server 40 creates and stores an index file including copyright information of the content in the index file database 30 and also provides an editor allowing the user to edit content purchased or created by the user to create edited content. The service server 40 creates an index file of the edited content and inherits and stores copyright information of the content referenced to create the edited content in the index file of the edited content and also receives and stores new copyright information and keywords input by the user in the index file of the edited content. Thus, even when the multimedia content is reedited, it is possible to inherit and track copyright information of the multimedia content.

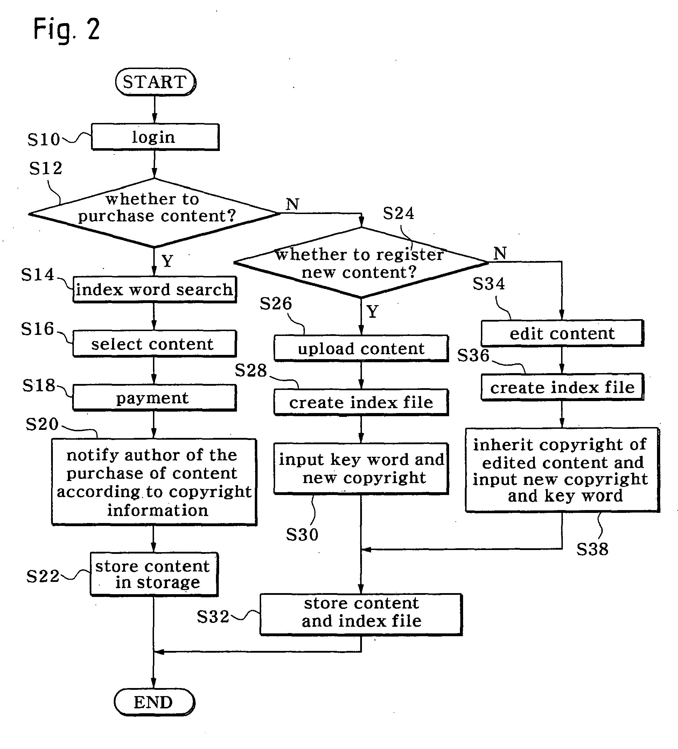

A method for controlling the system for tracking copyright information of content according to the invention will now be described with reference to a flow chart shown in FIG. 2.

First, when a user computer 60 is connected to the service server 40 through the Internet 50, the service server 40 performs a login procedure (S10).

After performing the login procedure, the service server 40 checks whether or not the user of the user computer 60 desires to purchase content provided by the service server 40 (S12).

More specifically, the service server 40 checks whether or not the user desires to purchase content to download the content or to play and view a stream of the content, or whether or not the user desires to register new multimedia content created on their own, or whether or not the user desires to edit their own created or purchased multimedia content.

In the case where the user desires to purchase content, the service server 40 receives, from the user, an index word (or keyword) for searching for multimedia content having a corresponding section in a plurality of multimedia content stored in the content database 20 and searches for multimedia content desired by the user through keyword searching in index files stored in the index file database 30 and then outputs search results (S14).

When the user selects multimedia content output in this manner to purchase the multimedia content and then makes payment of the multimedia content, the service server 40 tracks authors of the multimedia content through copyright information included in the index file and notifies the authors of transaction information of the multimedia content through material in the transaction information database 10 and distributes revenue for the multimedia content to the authors (S16, S18, S20).

The multimedia content purchased in this manner is stored in a purchaser storage portion (or purchaser storage box) of the user so that the purchaser (i.e., the user) can receive downloading and streaming services of the multimedia content during a specific duration and can edit or reedit the multimedia content (S22).

In the case where the user registers new multimedia content created on their own to sell the multimedia content or to allow the multimedia content to be serviced, the user uploads the multimedia content (S24, S26)

When the user uploads multimedia content, the service server 40 creates an index file of the multimedia content, which includes copyright information of the multimedia content, keywords extracted by analyzing a specific section of the multimedia content in human, thing, time, and space aspects, and start and end times of the specific section and also includes a content action ID of the multimedia content created by the user, a reference action ID, which is a reference content action ID of the multimedia content if the multimedia content has been reedited, and a top-level (or root) reference action ID, which is a top-level reference content action ID of the reedited multimedia content, for copyright tracking (S28).

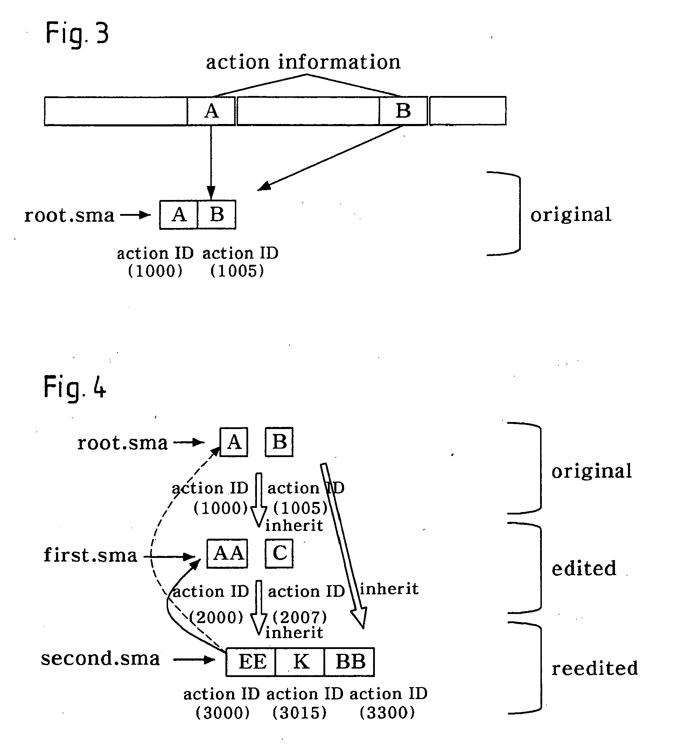

Specifically, as shown in FIG. 3, the service server 40 creates an index file "root.sma" for action information of the original multimedia content and allocates corresponding action IDs to actions of the content.

Here, an action ID "1000" is allocated to an action A and an action ID "1005" is allocated to an action B. As shown in Table 1, no action ID is allocated to a reference action ID (a_refid) and a top-level reference action ID (a_rootid) corresponding to the action ID (a_id) "1000" since the action ID (a_id) "1000" is that of original content which have no content to reference.

**TABLE 1**

| | |
|---|---|
| a_id | 1000 |
| a_rootid | |
| a_refid | |

The index file and the content created in this manner are stored in the index file database 30 and the content database 20, respectively (S30, S32).

When the user has decided to edit their own created or purchased multimedia content, the service server 40 allows the user to reedit their own created or purchased multimedia content stored in the purchaser storage portion (S34).

When the user reedits (or edits) the multimedia content and creates edited content, the service server creates an index file corresponding to the edited content (S36).

The index file includes a reference action ID and a top-level reference action ID which makes it possible to inherit and track copyright information of the multimedia content that has been reedited (S38).

Specifically, in the case where an action AA is reedited to create an action EE as shown in FIG. 4, the action AA is reedited content of an action A and the actions AA and A are content referenced to create the action EE. That is, the reference action of the action EE is the action AA and the top-level action is the action A.

Accordingly, an index file "second.sma" is created as the action EE is created. The index file "second.sma" inherits copyright information of the action AA from an index file "first.sma". The index file "first.sma" inherits copyright information of the action A from an index file "root.sma".

The following Table 2 shows the inheritance relationship of the index file "second.sma". It can be seen from Table 2 that the action ID "3000" of the action EE is stored in an action ID "a_id", the action ID "2000" of the action AA is stored in a reference action ID "a_refid", and the action ID "1000" of the action A is stored in a top-level reference action ID "a_rootid", thereby allowing copyright tracking according to copyright information of the content of the action EE.

**TABLE 2**

| | |
|---|---|
| a_id | 3000 |
| a_rootid | 1000 |
| a_refid | 2000 |

The index files and the content created in this manner are stored in the index file database 30 and the content database 20, respectively (S32).

As described above, unique action IDs are allocated to all actions and copyright tracking is performed by inheriting and tracking action information with reference to the action IDs, thereby protecting authors' copyrights even when the actions have been edited or reedited. This increases the value of the original work and allows the revenue to be redistributed properly, thereby making distribution of the content more active.

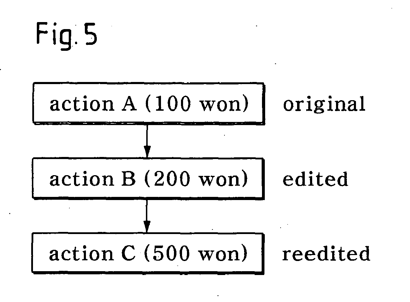

For example, in the case where an original action A is edited to create an action B and the action B is reedited to create an action C as shown in FIG. 5, the revenue for the sales price of each of the actions can be distributed in the following manner. Here, when the original action is edited or reedited to create an edited or reedited action, the ratio between a portion of the revenue distributed to an individual or entity who or which has created the original action and that distributed to an individual or entity who or which has created the edited or reedited action may be automatically determined according to the ratio of a specific aspect (such as the size or amount) of the edited or reedited action to that of the original action.

If the ratio between a portion of the revenue distributed to a server operator who or which operates the service server and that distributed to a seller who or which has created and sold the content is 5:5 and the original action A is sold for 100 won, 50 won of the sales price is paid to the server operator and the remaining 50 won is paid to the seller under the assumption that the sales price of the initially created, original action is equal to the total revenue.

When the edited action B is sold for 200 won, the revenue for the edited action B is 100 won since the edited action B is created by editing the action A whose purchase price is 100 won, and 50 won of the amount of the revenue is distributed to the server operator and the remaining 50 won is distributed to the seller.

When the reedited action C is sold for 500 won, 500 won includes the sum of the purchase prices of the actions A and B and thus the revenue for the action C is 200 won so that 100 won of the amount of the revenue is distributed to the server operator and the remaining 100 won is distributed to the seller.

In this embodiment of the revenue distribution method, the amount of revenue is calculated and distributed from the sales price simply through tracking of stored information, and the distribution ratio is determined according to the amount of transaction or the operating method.

As is apparent from the above description, the present invention provides a system for tracking copyright information of content and a method for controlling the same with a variety of features and advantages. For example, when a user creates multimedia content or edits content created by another to create edited content, through an index file which allows the user to search for desired content through a keyword based on humans, things, time, and/or space, the index file inherits copyright information of the content, thereby making it possible to perform keyword search of the content. In addition, copyright information of content is inherited as the content is transacted or edited, thereby making it possible to track and protect the copyright of content and also to perform proper distribution of the revenue for the sale of the content.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A system for tracking copyright information of content, the system comprising:
a content database that stores multimedia content;
an index file database that stores an index file, including an index for keyword search of the content database, and new or inherited copyright information;
a transaction information database that stores transaction information and copyright inheritance information of multimedia content as the multimedia content is transacted; and
a service server that allows multimedia content stored in the content database to be streamed or downloaded to a user computer connected through the Internet, creates an index file including copyright information of uploaded multimedia content and stores the created index file in the index file database and that allows the multimedia content stored in the content database to be edited and creates an index file of the edited content including new copyright information by inheriting higher-level copyright information of the edited content and stores the created index file in the index file database.

2. The system according to claim 1, wherein the index file includes copyright information of the multimedia content, a keyword extracted by analyzing a specific section of the multimedia content in human, thing, time, and space aspects, and start and end times of the specific section and also includes a content action ID of multimedia content created by the user, a reference action ID, which is a reference content action ID of the reedited multimedia content, and a top-level reference action ID, which is a top-level reference content action ID of the reedited multimedia content, for copyright tracking.

3. The system according to claim 2, wherein the index file further includes price information.

4. A method of controlling a system for tracking copyright information of content, the method comprising:
performing a login process when a user computer is connected through the Internet;
determining whether or not the user desires to purchase content after performing the login process;
receiving an input index word, when it is determined that the user desires to purchase content, and searching for a corresponding index file in an index database to retrieve corresponding content;
allowing the user to select the retrieved content to make payment;
tracking an author of the purchased content, who has copyright of the content, based on copyright information included in the index file, notifying the author of sale of the content, and storing the content in a purchaser's storage;
creating, when it is determined that the user desires to register new content, an index file of uploaded content;
receiving a key word and a new copyright in the created index file and storing the uploaded content and the created index file in the content database and the index file database;
allowing, when it is determined that the user desires to edit content, the user to edit the content stored in the purchaser's storage and creating an index file of the edited content; and
inheriting copyright information from the index file of the content referenced to create the edited file and receiving a key word and a new copyright and recording the inherited copyright information and a key word and a new copyright in the index file of the edited content and storing the edited content and the index file of the edited content in the content database and the index file database.

5. The method according to claim 4, wherein the purchaser's storage stores content purchased by the user and content created by the user.

6. The method according to claim 4, wherein the index file includes copyright information of the content, a keyword extracted by analyzing a specific section of the content in human, thing, time, and space aspects, and start and end times of the specific section and also includes a content action ID of content created by the user, a reference action ID, which is a reference content action ID of the reedited content, and a top-level reference action ID, which is a top-level reference content action ID of the reedited content, for copyright tracking.

7. The method according to claim 4, wherein notifying the author of the sale of the content includes performing distribution of revenue for the sale of the content.
